# EUROPÄISCHE PATENTSCHRIFT

(11) **EP 3 543 308 B1**
(45) Veröffentlichungstag und Bekanntmachung des Hinweises auf die Patenterteilung: **21.10.2020**
(21) Anmeldenummer: 19163248.8
(22) Anmeldetag: 15.03.2019
(51) Int. Cl.: C09J 153/02, C09J 157/02, C08K 5/10, C08L 93/04, C09J 7/38, C09J 7/10

(54) **WITTERUNGSBESTÄNDIGE KLEBEMASSE MIT GUTEM AUFFLIESSVERMÖGEN UND DARAUF BASIERENDE KLEBEBÄNDER**
WEATHER-RESISTANT ADHESIVE WITH GOOD FLOWING CHARACTERISTICS AND ADHESIVE TAPES BASED ON SAME
MATIÈRE ADHÉSIVE RÉSISTANTE AUX INTEMPÉRIES PRÉSENTANT DES BONNES PROPRIÉTÉS D'ÉCOULEMENT ET RUBANS ADHÉSIFS À BASE DE LADITE MATIÈRE ADHÉSIVE

(30) Priorität: 23.03.2018 DE 102018204463
(43) Veröffentlichungstag der Anmeldung: 25.09.2019
(73) Patentinhaber: tesa SE, 22848 Norderstedt (DE)
(72) Erfinder: DOLLASE, Thilo, 22397 Hamburg (DE); SCHMITZ-STAPELA, Daniel, 22529 Hamburg (DE); FENSKE, Martin Tassilo, 22605 Hamburg (DE)

(56) Entgegenhaltungen:
- WO-A1-2017/088168
- DE-A1-102008 062 130
- DE-A1-102015 220 065

## Beschreibung

Die vorliegende Erfindung betrifft eine Klebemasse für Permanentverklebungen mit hoher Witterungsstabilität, darauf basierende Klebebänder sowie deren Verwendung.

Styrolblockcopolymerhaltige Haftklebemassen sind bekannt und werden in verschiedensten Selbstklebebändern zu unterschiedlichen Zwecken eingesetzt. Die Kombination von Polystyrolblöcken und Polydienblöcken führen zu für viele Anwendungen vorteilhaften mechanischen und klebtechnischen Eigenschaften. Jedoch ist für bestimmte Anwendungen verbesserte Alterungsbeständigkeit gewünscht. Zu diesem Zweck werden häufig Styrolblockcopolymere eingesetzt, deren Polydienblock hydriert und damit gesättigt ist. Solche Formulierungen eignen sich auf Grund relativ geringer Klebkräfte besonders für reversible Haftklebeanwendungen aber auch als Hotmelts.

Bekannte Klebemassen mit einer gewissen Alterungsstabilität sind für glatte Untergründe gut geeignet. Problematisch ist jedoch regelmäßig die Haftung auf porösen und/oder faserhaltigen Untergründen. Die für diesen Fall gestellten Anforderungen, nämlich ein gewisses Einfließen der Klebemasse in den porösen Untergrund, können durch herkömmliche witterungsbeständige Klebemassen nicht in ausreichendem Maße erfüllt werden. Dies gilt umso mehr, wenn neben einer guten Haftung auf porösem Untergrund auch ein Ausquetschen der Klebemasse, das sog. "Oozing", vermieden werden soll. Oozing tritt auf, wenn die Klebemasse zu weich und daher nicht formstabil ist und im Falle eines aufgewickelten Klebebandes an den Seiten aus der Rolle austritt. Es ist bekannt, einer Klebemasse für die Einstellung der Fließfähigkeit Weichmacher zuzusetzen.

US 4,286,077 sowie US 6,455,627 offenbaren Haftklebeformulierungen basierend auf hydrierten Styrolblockcopolymeren, Klebharzen und optional Weichmachern.

DE 102007021504 A1 beschreibt Klebeprodukte auf Basis hydrierter Styrolblockcopolymere. Es werden reversibel klebende Klebeprodukte erhalten. Als Klebharz werden z. B. hydrierte Kohlenwasserstoffharze oder Derivate des Kolophoniums genannt. Ferner können Kohlenwasserstoff-basierende Weichmacher zum Einsatz kommen.

US 2009/0324940 A1 offenbart Klebemassen für Oberflächenschutzfolien, die aus hydrierten Styrolblockcopolymeren und Harzen aufgebaut sind. Die Klebemassen können Harze auf Basis stabilisierten Kolophoniums enthalten. Es handelt sich um Formulierungen für reversible Klebemassen mit geringer Klebkraft (< 3 N/cm).

Dem Fachmann sind aus dem Stand der Technik als Weichmacher für auf hydrierten Styrolblockcopolymeren basierenden Haftklebeformulierungen also vor allem Öle (paraffinische oder naphthenische) und flüssige Polyolefine oder Kautschuke oder flüssige Kohlenwasserstoffharze bekannt.

US 7,109,263 lehrt Haftklebeformulierungen für wiederablösbare Etiketten auf Basis von Styrolblockcopolymeren, wobei auch hydrierte Blockcopolymere eingesetzt werden können. Eine Reihe verschiedener Weichmacher, in der Hauptsache kohlenwasserstoff-basierende, werden aufgeführt sowie auch aromatische Ester, Alkyladipate und Alkylcitrate. Solche Klebemassen sind für Permanentverklebungen auf porösen oder faserhaltigen Untergründen jedoch nicht geeignet.

DE 10 2007 044 322 A1 beschreibt doppelseitige Klebebänder, mit denen großflächige Abdeckmaterialien zum Oberflächenschutz von z. B. Automobilen befestigt werden können. Zur Verklebung auf Automobillack werden Polyisobutylen-basierende Klebemassen vorgeschlagen, für die Befestigung des großflächigen Materials Polyacrylat-basierende Klebemassen. Es besteht weiterhin der Bedarf, Verklebungslösungen zur Verfügung zu stellen, die eine höhere Verklebungsfestigkeit auf dem großflächigen Material aufweisen, insbesondere wenn es sich bei dem großflächigen Material um eines basierend auf Polyolefinen handelt, also unpolar ist.

WO 2017/088168 A1 offenbart eine Zusammensetzung, die folgende Bestandteile umfasst:
- ein Styrolblockcopolymer,
- eine Polyamidwachs-Aufschlämmung, und
- ein organisches Lösemittel.

Die Zusammensetzung kann darüber hinaus ein Kohlenwasserstoff-Klebharz und einen Weichmacher umfassen; sie kann als Klebmasse verwendet werden.

Der vorliegenden Erfindung lag daher die Aufgabe zugrunde, eine Klebemasse bereitzustellen, die eine hohe Langzeitstabilität aufweist und insbesondere für die Verklebung auf porösen und/oder faserhaltigen Materialien, die auch flexibel und/oder unpolar sein können, geeignet ist.

Überraschenderweise wurde gefunden, dass eine Klebemasse, bestehend aus
(a) 25 Gew.-% bis 50 Gew.-%, bevorzugt 30 Gew.-% bis 40 Gew.-% zumindest einer Sorte eines gesättigten Vinylaromatenblockcopolymers,
(b) 20 Gew.-% bis 50 Gew.-%, bevorzugt 25 Gew.-% bis 45 Gew.-% zumindest einer Sorte eines ersten Klebharzes, das ein Kohlenwasserstoffharz mit einem DACP-Wert von mehr als +25°C und einem MMAP-Wert von mehr als +60°C ist,
   sowie entweder
(c1) 0 Gew.-% bis 10 Gew.-% zumindest einer Sorte eines zweiten Klebharzes mit einem DACP-Wert von weniger als 0°C und einem MMAP-Wert von weniger als +30°C, und
(d1)5 Gew.-% bis 25 Gew.-% zumindest einer Sorte eines aliphatischen oder cycloaliphatischen Alkylesters als Weichmacher,
   oder
(c2) 5 Gew.-% bis 25 Gew.-%, bevorzugt 10 Gew.-% bis 20 Gew.-% zumindest einer Sorte eines zweiten Klebharzes mit einem DACP-Wert von weniger als 0°C und einem MMAP-Wert von weniger als +30°C, und
(d2)5 Gew.-% bis 15 Gew.-% zumindest einer Sorte eines aliphatischen oder cycloaliphatischen Alkylesters als Weichmacher,
   sowie
(e) optional weiteren Additiven
diese Anforderungen erfüllt und es erlaubt, in einen porösen und/oder faserhaltigen Untergrund einzufließen, um einen guten Verbund herzustellen, aber gleichzeitig eine ausreichende Kohäsion zur Vermeidung von Oozing sowie eine gute Langzeitstabilität aufweist. Unter "guter Langzeitstabilität" ist dabei insbesondere die Stabilität gegenüber Temperatur-, Licht- und Oxidationseinflüssen zu verstehen.

"Bestehen aus" bzw. "bestehend aus" im Sinne der vorliegenden Erfindung bedeutet dabei, dass eine Formulierung oder Klebemasse nur die angeführten Verbindungen enthält und darüber hinaus keine weiteren Inhaltsstoffe vorhanden sind.

Bevorzugte Ausführungsformen der Klebemasse befinden sich in den Unteransprüchen.

### (a) Vinylaromatenblockcopolymer, insbesondere Styrolblockcopolymer

Die Elastomerkomponente (Blockcopolymerkomponente) enthält zumindest eine Sorte eines gesättigten Vinylaromatenblockcopolymers, insbesondere eines gesättigten Styrolblockcopolymers. Die Sättigung bezieht sich dabei nicht auf den Vinylaromatenblock, sondern auf den Elastomerblock, d.h. Weichblock. Erfindungsgemäß können somit auch Gemische aus verschiedenen gesättigten Vinylaromatenblockcopolymeren, insbesondere gesättigten Styrolblockcopolymeren ausgewählt werden. Typischerweise weist das Blockcopolymer mindestens anteilig die Struktur eines linearen Triblockcopolymers oder linearen oder radialen Multiblockcopolymers auf. Insbesondere ist das Blockcopolymer mindestens anteilig ausgewählt aus der Gruppe, bestehend aus Polystyrol-Poly(ethylen-*co*-butylen)-Polystyrol, Polystyrol-Poly(ethylen-*co*-propylen)-Polystyrol, im Elastomerblock gesättigtem Polystyrol-Poly(isopren-*co*-butadien)-Polystyrol, Polystyrol-Poly-iso-Butylen-Polystyrol und einem Gemisch davon. In Kombination mit linearem Triblockcopolymer oder linearem oder radialem Multiblockcopolymer, wie insbesondere einem oder mehreren der vorstehend genannten linearen Triblockcopolymere, kann vorteilhaft Diblockcopolymer eingesetzt werden. Das Diblockcopolymer ist vorzugsweise ausgewählt aus der Gruppe bestehend aus Polystyrol-Poly(ethylen-*co*-butylen), Polystyrol-Poly(ethylen-*co*-propylen), im Elastomerblock gesättigtem Polystyrol-Poly(isopren-*co*-butadien), Polystyrol-Poly-iso-Butylen und einer Mischung davon. Im Allgemeinen wird unter SEBS ein beliebiges Polystyrol-Poly(ethylen-*co*-butylen)-Blockcopolymer, unter SEPS ein beliebiges Polystyrol-Poly(ethylen-*co*-propylen)-Blockcopolymer, unter SEEPS ein beliebiges im Elastomerblock gesättigtes Polystyrol-Poly(isopren-co-butadien)-Blockcopolymer, und unter SiBS ein beliebiges Polystyrol-Poly-iso-Butylen-Blockcopolymer verstanden. Dabei kann es sich jeweils auch um eine Blockcopolymermischung verschiedener Strukturen handeln, wie zum Beispiel eine Mischung von linearem Triblockcopolymer, Diblockcopolymer und gegebenenfalls mindestens einer weiteren Struktur.

Der Anteil der Elastomerkomponente, d.h. des gesättigten Vinylaromatenblockcopolymers, an der Klebemasse beträgt 25 Gew.-% bis 50 Gew.-%, besonders bevorzugt 30 Gew.-% bis 40 Gew.-%. Mit diesen Gewichtsanteilen ist eine wunschgemäße Kohäsion der Klebemasse gewährleistet.

Die Elastomerkomponente enthält vorteilhaft zumindest anteilig ein Diblockcopolymer, bestehend aus einem A-Block (Polymerblock, vorwiegend gebildet aus Vinylaromat wie insbesondere Styrol) und einem B-Block (Polymerblock, vorwiegend gebildet durch Polymerisation von Butadien (und anschließender Hydrierung), Isopren (und anschließender Hydrierung) und/oder Isobutylen). Diblockcopolymere tragen zu Tack und Auffließvermögen der Klebemasse bei. Zumindest ein Vinylaromatenblockcopolymer wie Styrolblockcopolymer ist typischerweise ein Triblockcopolymer oder ein höheres Multiblockcopolymer mit zumindest zwei A-Blöcken und zumindest einem B-Block. Dieses kann als Triblockcopolymer eine lineare A-B-A-Struktur aufweisen. Einsetzbar sind ebenfalls Blockcopolymere von radialer Gestalt sowie sternförmige und lineare Multiblockcopolymere. Triblock- und Multiblockcopolymere tragen zur Kohäsion bei. Es können mehrere verschiedene Diblockcopolymere eingesetzt werden. Es können mehrere Triblock- und/oder Multiblockcopolymere eingesetzt werden. Der Gesamtblockcopolymergehalt in der Klebemasse liegt bei mindestens 25 Gew.-% und bei höchstens 50 Gew.-%. Deutlich geringere Anteile an Elastomer führen zu nicht ausreichender Kohäsion, was sich in reduzierter Halteleistung und/oder zu stark ausgeprägtem Oozing äußert. Deutlich höhere Anteile an Elastomer führen zu einem Abfall an Verklebungsfestigkeit insbesondere auf unpolaren Untergründen. Es leidet zudem das Auffließverhalten auf porösen und/oder faserhaltigen Substraten.

Der Anteil an Diblockcopolymer bezogen auf die Elastomerkomponente in der Klebemasseformulierung liegt vorzugsweise bei bis zu höchstens 50 Gew.-%, bevorzugt bei 10 Gew.-% bis höchstens 30 Gew.-%. Deutlich höhere Diblockanteile führen zu nicht ausreichender Kohäsion, was sich in reduzierter Halteleistung äußert. Entsprechend beträgt der Anteil an Tri- oder höherem Multiblockcopolymer in der Elastomerkomponente vorzugsweise von 50 Gew.-% bis 100 Gew.-%, bevorzugter 70 Gew.-% bis 90 Gew.-% in Bezug auf die Elastomerkomponente. Unter den Tri- oder höheren Multiblockcopolymeren sind die Triblockcopolymere besonders bevorzugt.

Die gewichtsmittlere Molmasse der Blockcopolymere (bestimmt nach Test la) liegt zwischen 50 000 g/mol und 500 000 g/mol, bevorzugt zwischen 75 000 g/mol und 200 000 g/mol. Der Anteil an Vinylaromatenblock, wie insbesondere Polystyrolblock, in den Blockcopolymeren kann von Blockcopolymersorte zu Blockcopolymersorte in der Formulierung unterschiedlich sein, liegt aber typischerweise bei mindestens 12 Gew.-%, bevorzugt bei mindestens 25 Gew.-% und höchstens bei 40 Gew.-%, bevorzugt höchstens bei 35 Gew.-%. Ein zu geringer Vinylaromatenanteil führt zu unzureichender physikalischer Vernetzung, die in den Vinylaromatenblockcopolymeren durch Mikrophasenseparation geschaffen wird. Die physikalische Vernetzung ist für Halteleistung wichtig und wirkt Oozing entgegen. Bei einem zu hohen Vinylaromatenanteil dagegen verliert die Klebemasse an Klebrigkeit.

Polystyrol-Polyisobutylen-Blockcopolymere sind unter der Marke "Sibstar" der Fa. Kaneka erhältlich. SEBS, SEPS können unter der Bezeichnung "Kraton G" von der Firma Kraton bezogen werden. SEPS und SEEPS werden z.B. als "Septon" von der Firma Kuraray angeboten SEBS wird von der Firma Asahi unter "Tuftec H" und von der von Firma Dynasol unter Calprene CH vertrieben.

### (b) Erstes Klebharz

Klebharze sind spezielle Verbindungen mit im Vergleich zu den Elastomeren niedriger Molmasse, üblicherweise mit einem Molekulargewicht (Test Ib) M_{W} < 5 000 g/mol. Typischerweise beträgt das Molekulargewicht Mw von 500 bis 5 000 g/mol, bevorzugt von 500 bis 2 000 g/mol. Das zumindest eine erste Klebharz weist einen DACP-Wert (nach Test II) von mindestens etwa +25 °C sowie einem MMAP-Wert (nach Test III) von mindestens etwa +60 °C auf. Das Klebharz weist eine Harzerweichungstemperatur (nach Test IV) von mindestens etwa 90 °C, bevorzugt von mindestens etwa 110 °C, und höchstens +140 °C, bevorzugt von höchstens +130 °C auf. Bei dem verwendeten zumindest einen ersten Klebharz handelt es sich um ein Kohlenwasserstoffharz.

Zu hohe Polarität (zu geringe DACP-Werte) führt zu beginnender Verträglichkeit mit den Vinylaromatenblöcken, was zu Reduktion der Kohäsion und damit zu Oozing führen kann.

Zu hohe Aromatizität (zu geringe MMAP-Werte) führt zu beginnender Verträglichkeit mit den Vinylaromatenblöcken, was zu Reduktion der Kohäsion und damit zu Oozing führen kann.

Als Klebrigmacher für die erfindungsgemäße Selbstklebemasse sind insbesondere hydrierte Kohlenwasserstoffklebharze geeignet.

Bevorzugt geeignet sind u. a.
- hydrierte Polymerisate des Dicyclopentadiens (zum Beispiel Escorez 5300er Serie; Exxon Chemicals // Sukorez Serie der Firma Kolon)
- hydrierte Polymerisate von bevorzugt C8- und C9-Aromaten (zum Beispiel Regalite und Regalrez Serien; Eastman Chemical//Arkon P Serie; Arakawa), diese können durch Hydrierung von Polymerisaten aus reinen Aromatenströmen entstehen oder auch durch Hydrierung von Polymerisaten auf Basis von Gemischen unterschiedlicher Aromaten entstehen
- teilhydrierte Polymerisate von C8- und C9-Aromaten (zum Beispiel Regalite und Regalrez Serien; Eastman Chemical//Arkon M; Arakawa)
- hydrierte Polyterpenharze (zum Beispiel Clearon P; Yasuhara)
- hydrierte C5/C9-Polymerisate (zum Beispiel ECR-373; Exxon Chemicals)
- aromatenmodifizierte selektiv hydrierte Dicyclopentadien-Derivate (zum Beispiel Escorez 5600er Serie; Exxon Chemicals)
- Hydrierte C5-Polymerisate (zum Beispiel Eastotac Serie; Eastman Chemical)

Beispiele für besonders geeignete erste Klebharze sind die unter den Bezeichnungen Regalite R 1100 und R 1125 vertriebenen hydrierten Kohlenwasserstoffharze der Firma Eastman Chemical.

Der Gesamtanteil an erstem Klebharz beträgt 20 Gew.-% bis 50 Gew.-%, bevorzugt 25 Gew.-% bis 45 Gew.-%.

### (c) Zweites Klebharz

Das zumindest eine zweite Klebharz weist einen DACP-Wert (nach Test II) von höchstens etwa 0°C sowie einem MMAP-Wert (nach Test III) von höchstens etwa +30 °C auf. Das zweite Klebharz weist eine Harzerweichungstemperatur (nach Test IV) von mindestens etwa 70 °C, bevorzugt von mindestens etwa 90 °C, und höchstens +140 °C, bevorzugt von höchstens +120 °C auf. Bei dem verwendeten zumindest einen zweiten Klebharz handelt es sich vorteilhaft um ein sauerstoffhaltiges Harz, sehr bevorzugt um Ester des Kolophoniums und insbesondere stabilisierte und/oder hydrierte Typen.

Bevorzugt unter diesen Harzen werden Klebharze oder Klebharzgemische ausgewählt aus: (a) nicht hydrierten, partiell und/oder vollständig hydrierten Kolophonium basierenden Harzen, (b) nicht hydrierten, partiell und/oder vollständig hydrierten Kolophoniumester basierenden Harzen, (c) nicht hydrierten, partiell und/oder vollständig hydrierten Rohtallöl basierenden Harzen, (d) nicht hydrierten, partiell und/oder vollständig hydrierten Rohtallölester basierenden Harzen. Hauptbestandteil der vorgenannten Kolophoniumharze sind Harzsäuren umfassend hauptsächlich Pimarsäure und Abietinsäure. Weitere enthaltende und/oder synthetisch veränderte Harzsäuren sind Neoabietinsäure, Palustrinsäure, Dihydroabietinsäure oder Dehydroabietinsäure, iso-Pimarsäure, Lävopimarsäure und Boswelliasäure. Das Tallöl ist ein aus dem festen Kolophoniumharz gewonnenes öliges Stoffgemisch umfassend neben den bereits genannten Harzsäuren Fettsäuren, insbesondere ungesättigte Fettsäuren mit 18 C-Atomen, und Sterine. Die Harzsäuren und/oder Fettsäuren können verestert sein, insbesondere mit Triethylenglycol, Glycerin oder Pentaerythritol, und/oder oligomerisiert sein und/oder unmodifiziert, stabilisiert, (teil-, hochgradig oder voll-) hydriert, dehydriert oder disproportioniert.

Beispiele für als zweites Klebharz einsetzbare Harze sind:
Harze der Firma Eastman Chemical wie Glycerolester des Kolophoniumharzes beziehungsweise der Tallöl basierenden Harze wie Permalyn™ 2085, Permalyn™ 5095, Permalyn™ 5095-C, hydriertes beziehungsweise teilweise hydriertes Kolophoniumharz wie Foral™ 105-E CG, Foral™ AX-E, Foral™ 85-E, Foral™, 85-E CG, Foral™ 105-E, Dymerex™, Foralyn™ E, Poly-Pale™, Staybelite™ Resin-E, Pentaerytritolester der Kolophonium beziehungsweise Tallöl basierenden Harze wie Permalyn™ 51 1 -M, Permalyn™ 3100, Permalyn™ 51 10, Permalyn™ 51 10-C, Permalyn™ 61 10, Permalyn™ 61 10-M und Permalyn™ 8120;
Harze der Firma Pinova wie Pinova™ Ester Gum 8DA, Melhi® NLM, Pexalyn® 9085, Staybelite® Ester 5, Staybelite® Ester 5A, Staybelite® Ester 10, Staybelite® Ester 10A, Foral® 85, Foral® 85LB, Foral® 2085, Pentalyn® A, Pexalyn® 9100, Pexalyn® T100, Pexalyn® 295, Pentalyn® H, Pentalyn® HA, Pentalyn® 830, Pentalyn® FC, Pentalyn® G, Pentalyn® X, Foral® 105;
Harze der Firma DRT wie Granolite SG, Granolite P, Dertoline SG2, Dernatac G95, Dernatac P105, Hydrogral P.

Die zweiten Klebharze sind bevorzugt Kolophoniumharze oder Rohtallölharze, wobei hydrierte oder disproportionierte Kolophoniumester ganz besonders bevorzugt sind. Explizit genannt seien hier Foral 105-E, Foral 85-E und insbesondere Foral AX-E (sämtlich Produkte der Firma Eastman Chemical).

Der Gesamtanteil an zweitem Klebharz beträgt 0 Gew.-% bis 25 Gew.-%, bevorzugt 5 Gew.-% bis 20 Gew.-%, sehr bevorzugt 10 Gew.-% bis 15 Gew.-%.

Insbesondere beträgt der Anteil an zweitem Klebharz 0 Gew.-% bis 10 Gew.-%, wenn der zumindest eine Weichmacher zu 5 Gew.-% bis 25 Gew.-% eingesetzt wird. Unabhängig davon beträgt der Anteil an zweitem Klebharz 5 Gew.-% bis 25 Gew.-%, bevorzugt 10 Gew.-% bis 20 Gew.-%, wenn der zumindest eine Weichmacher zu 5 Gew.-% bis 15 Gew.-% eingesetzt wird.

### (d) Aliphatische oder cycloaliphatische Alkylester als Weichmacher

Im Sinne dieser Erfindung werden Weichmacher auf Basis von aliphatischen oder cycloaliphatischen Alkylestern eingesetzt. Bei den Estern handelt es sich bevorzugt um Ester aliphatischer oder cycloaliphatischer Carbonsäuren, insbesondere Dicarbonsäure. Einsetzbar sind aber auch Phosphorsäureester (Phosphate). Unter den aliphatischen Carbonsäureestern seien Alkyl- oder Cycloalkyladipate wie insbesondere Di-(2-Ethylhexyl)-adipat, Diisononyladipat, Diisodecyladipat, Ditridecyladipat und Dioctyladipat als Beispiele genannt. Weitere Beispiele sind Alkyl- und Cycloalkylsebacate wie insbesondere Di-(2-Ethylhexyl)-sebacat und Alkyl- und Cycloalkylazelate wie insbesondere Di-(2-Ethylhexyl)-azelat. Besonders bevorzugt werden aliphatische oder cycloaliphatische Cyclohexyldicarbonsäurediester, wie sie zum Beispiel in der WO 2011/009672 A1 beschrieben sind, eingesetzt, insbesondere 1,2-Diisobutylcyclohexandicarbonsäureester, 1,2-Di-(2-Ethylhexyl)-cyclohexandicarbonsäureester oder 1,2-Diisononylcyclohexandicarbonsäureester (auch als "DINCH" bezeichnet). Ausgewählte Vertreter dieser Gruppe sind beispielsweise von BASF SE erhältlich.

In einer ersten Auslegung der vorliegenden Erfindung beträgt der Gewichtsanteil der Alkylester als Weichmacher 5 Gew.-% bis 25 Gew.-% und zwar im Fall, dass das zumindest eine zweite Klebharz zu bis zu 10 Gew.-% eingesetzt wird. Ein zu hoher Gewichtsanteil an Summe aus Alkylester und zweitem Klebharz hat nachteilige Auswirkungen auf die Kohäsion.

In einer zweiten Auslegung der vorliegenden Erfindung beträgt der Gewichtsanteil der Alkylester als Weichmacher 5 Gew.-% bis 15 Gew.-% und zwar im Fall, dass das zumindest eine zweite Klebharz zu mindestens 5 Gew.-% und höchstens 25 Gew.-% eingesetzt wird, bevorzugt zu mindestens 10 Gew.-% und höchstens 20 Gew.-%. Ein zu hoher Gewichtsanteil an Summe aus Alkylester und zweitem Klebharz hat nachteilige Auswirkungen auf die Kohäsion.

Übliche niederviskose Weichmacher wie Mineralöle sind im Sinne dieser Erfindung unvorteilhaft. Ihr Anteil in der Gesamtrezeptur liegt bei vorzugsweise höchstens 1 Gew.-%, sehr bevorzugt wird auf solche Weichmacher vollständig verzichtet. Andere Weichmacher wie niedermolekulare Polybutene oder niedermolekulare C5-basierende Kohlenwasserstoffweichharze sind nicht geeignet, da sie sich negativ auf die Klebkraft auswirken können.

### (e) Optionale weitere Additive

Der Klebemasse können als weitere Additive vor allem Schutzmittel zugesetzt werden. Hier seien Alterungsschutzmittel primärer und sekundärer Art, Licht- und UV-Schutzmittel sowie Flammschutzmittel genannt und auch Füllstoffe, Farbstoffe und Pigmente. Die Klebemasse kann so beliebig gefärbt oder weiß, grau oder schwarz sein.

Typische Einsatzmengen für ein Additiv liegen bei bis zu 2 Gew.-%, bezogen auf die Gesamtklebemassezusammensetzung.

Füllstoffe oder Pigmente können höher dosiert werden, und zwar typischerweise zu einem Anteil von bis 5 Gew.-% bezogen auf die Gesamtklebemassezusammensetzung.

Als Additive können typischerweise genutzt werden:
- primäre Antioxidantien wie zum Beispiel sterisch gehinderte Phenole
- sekundäre Antioxidantien, wie zum Beispiel Phosphite oder Thioether
- Prozessstabilisatoren wie zum Beispiel C-Radikalfänger
- Flammschutzmittel
- Lichtschutzmittel wie zum Beispiel UV-Absorber oder sterisch gehinderte Amine
- Farbstoffe und/oder Pigmente (wie z. B. Ruß)
- Verarbeitungshilfsmittel
- (Nano)Füllstoffe wie zum Beispiel Siliziumdioxid, Aluminiumoxid, Titandioxid oder Schichtsilikate, ebenso Farbpigmente und Farbstoffe (für transparente aber gezielt gefärbte Ausgestaltungen) sowie optische Aufheller
- Endblockverstärkerharze sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine.

Antioxidationsmittel werden insbesondere in einer Menge von 0,2 Gew.-% bis 1,5 Gew.-% eingesetzt. Dabei sind Alterungsschutzmittel, ausgewählt aus der Gruppe der Ein- und/oder Mehrkernphenole, die in Ortho- und/ oder Parastellung zur phenolischen OH-Gruppe eine Benzylthioethergruppierung tragen, besonders bevorzugt.

Weiterhin bevorzugt ist der Zusatz von mindestens einem UV-Schutzmittel, insbesondere in einer Menge von 0,5 Gew.-% bis 2 Gew.-%.

Die vorliegende Erfindung betrifft darüber hinaus auch Klebebänder, enthaltend zumindest eine Schicht einer erfindungsgemäßen Klebemasse.

Typische Produktaufbauten sind Klebebänder (einseitige oder doppelseitige), -folien und -stanzlinge. Einseitige oder doppelseitige Klebebänder, -folien oder -stanzlinge enthalten zumindest eine Lage eines permanent im Produkt verbleibenden Trägers. Kommt keine permanent im Klebeband vorhandene Trägerschicht zum Einsatz (bei einem sog. Transferklebeband), dann liegen Schichtdicken der Klebemasseschichten bei mindestens 20 µm und bei bis zu 1 mm. Sehr bevorzugt sind Schichtdicken zwischen etwa 40 µm und etwa 800 µm. Vielfältige Anwendungsmöglichkeiten sind auch für Klebebänder zwischen etwa 75 µm und etwa 400 µm denkbar, sofern keine weiteren Schichten wie insbesondere permanent im Klebeband vorhandenes Trägermaterial zum Einsatz kommen. Kommen Klebeschichten basierend auf erfindungsgemäßen Klebemassen auf einem im Klebeband permanent vorhandenem Trägermaterial zum Einsatz, dann liegen die Schichtdicken dieser Klebeschichten bei mindestens 15 µm und bevorzugt höchstens 250 µm, bevorzugt bei mindestens 50 µm und sehr bevorzugt bei höchstens 150 µm.

Im Falle von doppelseitigen Klebebändern, die mindestens einen permanent im Produkt verbleibenden Träger aufweisen, können auf den beiden Seiten des Trägers unterschiedliche Klebemassen aufgetragen sein. Dadurch ist es möglich, Oberflächen mit sehr unterschiedlichen Eigenschaften miteinander zu verbinden. So sind beispielsweise doppelseitige Klebebänder denkbar, die eine permanent im Klebeband verbleibende Trägerschicht enthalten, deren erster Hauptoberfläche eine Schicht A einer erfindungsgemäßen Klebemasse zugeordnet ist und deren zweiter Hauptoberfläche eine Schicht B einer anderweitig ausgewählten Klebemasseschicht zugeordnet ist. Für Schicht B kann vorteilhaft eine Polyacrylat-basierende Klebemasse ausgewählt werden. Für Schicht B kann zudem vorteilhaft eine Polyisobutylen-basierende Klebemasse ausgewählt werden. Für Schicht B kann zudem vorteilhaft eine Polyethyl-Vinylacetat (EVA)-basierende Klebemasse ausgewählt werden. Für Schicht B kann zudem vorteilhaft eine Klebemasse basierend auf gesättigten Vinylaromaten-, wie insbesondere Styrolblockcopolymeren ausgewählt werden, die nicht den Beschreibungen für erfindungsgemäße Klebemasseformulierungen entspricht, enthaltend also beispielsweise andere Typen von Kleb- und/oder Weichharzen oder Kleb- und/oder Weichharze in anderen Anteilen.

Für Schicht B kann jedoch auch eine weitere Schicht einer erfindungsgemäßen Klebemasse ausgewählt werden, in gleicher oder verschiedener Art im Vergleich zu der für Schicht A ausgewählten.

Zur Herstellung der optional zumindest einen permanent im Produkt verbleibenden Trägerfolie können prinzipiell alle filmbildenden und/oder extrusionsfähigen Polymere eingesetzt werden. Siehe hierzu beispielsweise die Zusammenstellung von Nentwig [J. Nentwig, Kunststofffolien, Kapitel 5, 2. Aufl., 2000, C. Hanser, München]. In einer bevorzugten Auslegung werden Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern, wie z. B. die Erweichungstemperatur und/oder die Reißfestigkeit.

In einer weiteren bevorzugten Auslegung dieser Erfindung in Bezug auf permanent im Produkt verbleibende Trägerfolien werden Polyvinylacetate eingesetzt. Polyvinylacetate können neben Vinylacetat auch Vinylalkohol als Comonomer enthalten, wobei der freie Alkoholanteil in weiten Grenzen variiert werden kann. In einer weiteren bevorzugten Auslegung dieser Erfindung werden Polyester als Trägerfolie eingesetzt. In einer besonders bevorzugten Auslegung dieser Erfindung werden Polyester auf Basis von beispielsweise Polyethylenterephthalat (PET) oder Polybutylenterephthalat (PBT) eingesetzt. Es ist auch möglich, halogenierte Kohlenwasserstoffe als Folienbasismaterial wie zum Beispiel Polyvinylidenchlorid oder fluorierte Systeme zu nutzen. In einer weiteren bevorzugten Auslegung dieser Erfindung werden Polyamide zur Herstellung von Folien eingesetzt. Die Polyamide können aus einer Dicarbonsäure und einem Diamin oder aus mehreren Dicarbonsäuren und Diaminen bestehen. Neben Dicarbonsäuren und Diaminen lassen sich auch höher funktionelle Carbonsäuren und Amine auch in Kombination mit den oben genannten Dicarbonsäuren und Diaminen einsetzen. Zur Versteifung der Folie werden bevorzugt zyklische, aromatische oder heteroaromatische Ausgangsmonomere eingesetzt. In einer weiteren Auslegung dieser Erfindung werden Polymethacrylate zur Herstellung von Folien eingesetzt. Hier kann durch die Wahl der Monomere (Methacrylate und z. T. auch Acrylate) die Glasübergangstemperatur der Folie gesteuert werden. Weiterhin können die Polymethacrylate auch Additive enthalten, um z. B. die Flexibilität der Folie zu erhöhen oder die Glasübergangstemperatur ab- oder heraufzusetzen oder die Ausbildung von kristallinen Segmenten zu minimieren. In einer weiteren bevorzugten Auslegung dieser Erfindung werden Polycarbonate zur Herstellung von Folien eingesetzt. Ferner können in einer weiteren Auslegung dieser Erfindung auf Vinylaromaten und Vinylheteroaromaten basierende Polymere und Copolymere zur Herstellung der zumindest einen optionalen Trägerfolie eingesetzt werden.

Die optional zumindest eine Trägerfolie kann wahlweise monoaxial orientiert, biaxial orientiert oder nicht orientiert vorliegen.

Zur Herstellung eines folienförmigen Materials kann es angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern. Als weitere optional einsetzbare Additive können Alterungsschutzmittel, Lichtschutzmittel wie insbesondere UV-Schutzmittel, Antioxidantien, weitere Stabilisatoren, Flammschutzmittel, Pigmente, Farbstoffe und/oder Blähmittel enthalten sein.

Die optional zumindest eine Trägerfolie kann selbst als Einschichtaufbau zum Einsatz kommen, oder auch als mehrschichtiger Verbund, der beispielsweise durch Coextrusion gewonnen wurde. Ferner kann die Trägerfolie auch auf einer und/oder beiden Seiten vorbehandelt und/oder mit einer funktionellen Schicht versehen sein. Sind beide Seiten vorbehandelt und/oder beschichtet, dann kann die Art und/oder Ausprägung der Vorbehandlung und/oder Beschichtung unterschiedlich oder gleich sein. Eine solche Vorbehandlung und/ oder Beschichtung kann beispielsweise zu einer verbesserten Verankerung einer weiteren Schicht dienen wie beispielsweise der zumindest einen Klebemassenschicht A oder anderer optional einsetzbarer Schichten. Zu diesem Zweck ist es besonders vorteilhaft, wenn eine oder beide Seiten der Trägerfolie mit einer oder verschiedenen Sorte(n) an Primern und/oder wenn eine oder beide Seiten der Trägerfolie durch eine Corona-Behandlung und/oder eine Beflammung und/oder eine Plasmabehandlung und/oder weitere Methoden zur Oberflächenaktivierung vorbehandelt werden.

Die optional zumindest eine Trägerfolie kann im Sinne dieser Erfindung transparent und farblos oder aber transparent und farbig sein. Außerdem ist es erfindungsgemäß, wenn die Folie nicht transparent ist und zudem weiß, grau, schwarz oder farbig.

Die optional zumindest eine Schicht eines Trägermaterials weist eine Schichtdicke zwischen einschließlich 5 µm und einschließlich 500 µm, bevorzugt zwischen einschließlich 10 µm und einschließlich 100 µm auf.

Die Klebemasse der vorliegenden Erfindung ist insbesondere für poröse und/oder raue und/oder faserhaltige Oberflächen geeignet. Dabei kann das Substrat auch flexibel sein. Das Substrat kann auch unpolar sein. Es kann sich insbesondere um Gewebe, Gelege und Gewirke wie insbesondere Vliese handeln.

Beispiele für faserhaltige Substrate sind Vliese, bei denen es sich um Flächengebilde aus einzelnen Fasern handelt. Dabei können alle nach der Norm DIN EN 29092 (1992/08) definierten Vliese eingesetzt werden. Das Vlies besteht aus lose zusammengelegten Fasern, welche noch nicht miteinander verbunden sind. Die Festigkeit resultiert aus der Faser-eigenen Haftung. Man differenziert auch zwischen verfestigten und nicht-verfestigten Vliesen. Die Fasern sind statistisch verteilt. Die Vliese lassen sich nach den Fasermaterialien differenzieren. Als Fasermaterialien können mineralische Fasern, wie z.B. Glas, Mineralwolle oder Basalt, tierische Fasern, wie z.B. Seide oder Wolle, pflanzliche Fasern, wie z.B. Baumwolle, Zellulose, chemische Fasern, wie z.B. Polyamid, Polypropylen, Polyphenylensulfid, Polyacrylnitril, Polyimid, Polytetrafluorethylen, Aramid oder Polyester, oder Mischungen aus den vorgenannten Substanzen eingesetzt werden. Die Fasern können mechanisch durch Vernadelung oder Wasserstrahlen verfestigt werden, chemisch durch Zugabe von Bindemitteln oder thermisch durch das Erweichen in einem geeigneten Gasstrom, zwischen beheizten Walzen oder auch in einem Dampfstrom.

In einer sehr bevorzugten Auslegung der Erfindung werden Vliese auf Cellulosebasis eingesetzt. Ebenso werden Polyolefin-basierende Vliese als Substrat bevorzugt. Das Flächengewicht der Vliese beträgt bevorzugt zwischen 4 und 100 g/m², besonders bevorzugt zwischen 10 und 70 g/m². Solche Vliese sind z.B. kommerziell von der Firma Glatfelter erhältlich. Die Dicke dieser Vliese beträgt bevorzugt zwischen 20 und 100 µm, äußerst bevorzugt zwischen 30 und 60 µm.

Soll ein Gegenstand mit einer porösen Oberfläche auf einem Gegenstand mit einer glatten Oberfläche befestigt werden, so sind doppelseitige Klebebänder, deren eine Seite mit einer Klebemasse gemäß der vorliegenden Erfindung beschichtet ist, wohingegen auf der anderen Seite eine Klebemasse, die gut auf glatten Oberflächen haftet, aufgebracht ist, sehr gut geeignet. Ein Beispiel für eine derartige Anwendung ist die Anbringung von Schutzhauben auf einem zu schützenden Objekt. Die Schutzhaube besteht dabei aus einem faser-haltigen also porösen Gelege, das Polyolefin-basierend sein kann. Ein Beispiel für ein solches Schutzhaubenmaterial ist Spinnvlies-Olefin Tyvek® der Fa. DuPont (http://www.dupont.de/produkte-und-dienstleistungen/verpackungsmaterialien-undloesungen/industrielle-verpackungen/use-and-applications/protective-covers.html vom 18.12.2017).

Die erfindungsgemäßen Klebemassen ermöglichen ein gewisses Einfließen der Klebemasse in den porösen und/oder faserhaltigen Untergrund und gewährleisten gleichzeitig die Anforderungen an Witterungsbeständigkeit. Neben einer guten Haftung auf porösem Untergrund wird darüber hinaus trotz des Zusatzes von Weichmachern ein Ausquetschen der Klebemasse, das sog. "Oozing" vermieden.

Klebefolien können in beiden Dimensionen beliebige Ausmaße annehmen. Klebebänder sind zum Beispiel 2 mm, 5 mm, 10 mm, 20 mm oder 50 mm breit. Klebebänder können zu Rollen gewickelt vorliegen.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Klebeprodukte werden insbesondere auf einem Trennliner (bevorzugt silikonisiertes Papier oder silikonisierte Folie) bereitgestellt. Der Liner kann einseitig trennend ausgestattet sein. Dann kommt vorteilhaft eine zweite Lage eines Liners zur Abdeckung der zweiten Oberfläche zum Einsatz (vor allem bei Stanzlingen). Der Liner kann auch beidseitig trennend ausgestattet sein. Dann kann mit einer Linerlage gearbeitet werden (vor allem bei Klebebändern).

Die Herstellung der Klebemassen kann sowohl lösungsmittelbasiert wie auch lösungsmittelfrei erfolgen. Die lösungsmittelfreie Herstellung ist, da billiger und schneller, bevorzugt, wobei es auch Anwendungsbereiche geben kann, in denen die lösungsmittelbasierte Herstellung bevorzugt ist. Dies gilt zum Beispiel, wenn besondere Anforderungen an die Qualität für die optischen Eigenschaften gestellt werden. In diesem Zusammenhang seien Verklebungsanwendungen im Bereich von Geräten der Consumerelektronik genannt.

Für die lösungsmittelfreie Herstellung sind wahlweise die Verwendung eines Hotmelt-Kneters oder eines Extruders besonders bevorzugt.

Weitere Schichten des Klebebandes können durch Kaschieren in den Produktaufbau eingebracht werden.

Demgemäß betrifft die Erfindung zudem ein doppelseitiges Klebeband zur Befestigung von großen Flächengebilden zum Transport- und/oder Montageschutz auf Untergründen wie Automobillack, bestehend aus einer ersten Klebeseite A aus einer erfindungsgemäßen Klebemasse und einer zweiten Klebeseite B aus einer Klebemasse B, wobei Klebemasse B selbstklebrig und für eine reversible Verklebung auf Automobillack geeignet ist.

Alternativ betrifft die Erfindung ein doppelseitiges Klebeband zur Befestigung von großen Flächengebilden zum Transport- und/oder Montageschutz auf Untergründen wie Automobillack, bestehend aus einer ersten Klebeseite A aus einer erfindungsgemäßen Klebemasse und aus einer zweiten Klebeseite B aus einer Klebemasse B, die Isobutylkautschuk oder dessen Derivate oder Abmischungen beinhaltet.

Die Seite des Klebebands mit der erfindungsgemäßen Klebemasse ist bei Verwendung dem großen Flächengebilde zugewandt und dient seiner Befestigung. EP 2 036 961 A1 beschreibt solche Anwendungen.

Allgemein besteht ein erfindungsgemäßer Gegenstand aus einem Klebeband mit zwei Klebeschichten. In einer vorteilhaften Ausführung sind diese von einem Trägermaterial unterstützt. Dieses kann ein Gewebe, Gewirke, Gelege, Vlies, Folie, Papier, und deren Verbundwerkstoffe und Kombinationsprodukte sein, welche auf natürliche oder synthetische Materialien oder deren Kombination oder Mischung basieren.

Demzufolge werden vorteilhafterweise polymere Folien, Vliese oder Gewebe aus Polypropylen, Polyester, Polyamid, Polyurethan oder Polyethylen sowie auch in Kombination mit mineralischen Fasern wie Glasfasern oder Kohlenstofffasern oder aus Produkten wie Gewebe, Gelege und Gewirke mit Cellulose oder Baumwollfasern, ferner metallischen Ursprungs eingesetzt. Für spezielle Anwendungen können auch Mischprodukte wir Compounds oder Mischfaserprodukt, gegebenenfalls als Mischfaserfäden, -garne oder -zwirne eingesetzt werden. Diese können teilweise gefärbt oder anderweitig ausgerüstet sein, um das Trägermaterial optische oder mechanische Merkmale und Eigenschaften zu verleihen. In alternativen Ausführungen können auch Fasern natürlichen Ursprungs wie Baumwolle, Seide, Flachs oder Zellwolle verwendet werden.

Bei der alternativen Ausführungsform des Erfindungsgegenstands wird ein Vlies als Trägermaterial zum Maskieren von Oberflächen eingesetzt. Das Vlies ist dabei durch die Bildung von Nähten, die von Maschen aus den Fasern des Vlieses gebildet werden, verstärkt, wobei vorteilhafterweise die Anzahl der Nähte auf dem Vlies mindestens 3/cm, bevorzugt 5/cm bis 50/cm, beträgt.

In einer weiteren vorteilhaften Ausführungsform ist der Erfindungsgegenstand von Hand senkrecht zur Orientierung und/oder in Richtung der Nähte reißbar. Dieses findet häufig dann Anwendung, wenn das erfindungsgemäße Produkt auf sich selbst zur Rolle gewickelt wird.

Bei einer anderen Ausführungsform ist diese Reißbarkeit nicht notwendig. Hier kann es sich um gestanzte Produkte zum Verkleben auf dem großen Flächengebilde handeln.

Die erfindungsgemäße Klebemasse weist vorteilhaft folgendes Eigenschaftsprofil auf:

| Eigenschaft | Leistungsniveau | Bevorzugtes Leistungsniveau | Sehr bevorzugtes Leistungsniveau |
|---|---|---|---|
| Klebkraft (Test V) | ≥ 8 N/cm | ≥ 10 N/cm | ≥ 12 N/cm |
| Alterungsbeständigkeit (Test VI) | i. O. | i. O. | i. O. |

### Prüfmethoden

### Testmethode I - Molekulargewicht, GPC

Ia: Blockcopolymere: Die Bestimmung des mittleren Molekulargewichtes Mw (Gewichtsmittel) der Blockcopolymere - auch Molmasse genannt - erfolgt mittels Gelpermeationschromatographie (GPC). Als Eluent wird THF eingesetzt. Die Messung erfolgt bei 23 °C. Als Vorsäule wird PSS-SDV, 5 µm, ID 8,0 mm x 50 mm verwendet. Zur Auftrennung wurden die Säulen PSS-SDV, 5 µm, 10³ Å, 10⁵ Å und 10⁶ Å mit jeweils ID 8,0 mm x 300 mm eingesetzt. Die Probenkonzentration beträgt ca. 3 g/l, die Durchflussmenge 1,0 ml pro Minute. Es wird gegen PS-Standards gemessen. Als Detektor wird ein Brechungsindexdetektor verwendet.

Ib: Klebharze: Die Bestimmung des mittleren Molekulargewichtes Mw (Gewichtsmittel) der Klebharze - auch Molmasse genannt - erfolgt mittels Gelpermeationschromatographie (GPC). Als Eluent wird THF eingesetzt. Die Messung erfolgt bei 23 °C. Als Vorsäule wird PSS-SDV, 10 µm, ID 8,0 mm x 50 mm verwendet. Zur Auftrennung wurden die Säulen PSS-SDV, 5 µm, 10³ Å und 10² Å mit jeweils ID 8,0 mm × 300 mm eingesetzt. Die Probenkonzentration beträgt ca. 2 g/l, die Durchflussmenge 1,0 ml pro Minute. Es wird gegen PS-Standards gemessen. Als Detektor wird ein Brechungsindexdetektor verwendet. GPC bietet sich zudem als messtechnisches Verfahren zur Bestimmung des Diblock-Anteils an, sofern Herstellerangaben für ein Blockcopolymer nicht zur Verfügung stehen sollten. Für die im Sinne dieser Erfindung einsetzbaren durch lebende anionische bzw. kationische Polymerisation hergestellten Blockcopolymere sind die Molmassenverteilungen typischerweise ausreichend eng, so dass Polymermoden, die sich Triblockcopolymeren einerseits und Diblockcopolymeren andererseits zuordnen lassen, ausreichend voneinander aufgelöst im Elugramm auftreten. Der Diblock-Anteil lässt sich dann als Integral des entsprechenden Molmassensignals quantifizieren, bezogen auf die Summe der Integrale der Molmassensignale der Diblock-Mode und der übrigen Blockcopolymer-Moden (Triblock-Mode oder Mode eines höheren Blockcopolymers).

### Testmethode II - DACP-Wert

Der DACP ist der Diaceton-Trübungspunkt und wird im Rahmen der vorliegenden Erfindung folgendermaßen bestimmt: In ein trockenes Probenglas werden 5,0 g Testsubstanz (das zu untersuchende Klebharzmuster) eingewogen und mit 5,0 g Xylol (Isomerengemisch, CAS [1330-20-7], ≥ 98,5%, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99%, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Ist der Trübungspunkt bei -50 °C noch nicht erreicht, wird die Messung beendet und als Resultat für den DACP-Wert "<-50°C" notiert. Je geringer der DACP-Wert desto höher ist die Polarität der Testsubstanz.

Zur Bestimmung von DACP-Werten wird zudem auf C. Donker, PSTC Annual Technical Seminar, Proceedings, S. 149-164, Mai 2001, verwiesen.

### Testmethode III - MMAP-Wert

MMAP ist der gemischte-Methylcyclohexan-Anilin-Trübungspunkt, der unter Verwendung eines modifizierten ASTM D 611 - 12(2016)-Verfahrens bestimmt wird. Im Rahmen der vorliegenden Erfindung wird der MMAP-Wert bestimmt, indem 5,0 g Testsubstanz, also das zu untersuchende Klebharzmuster, in ein trockenes Probenglas eingewogen und mit 10 mL trockenem Anilin (CAS [62-53-3], ≥ 99,5%, Sigma-Aldrich #51788 oder vergleichbar) und 5 mL trockenem Methylcyclohexan (CAS [108-87-2], ≥ 99%, Sigma-Aldrich #300306 oder vergleichbar) versetzt werden. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der MMAP-Wert desto höher ist die Aromatizität der Testsubstanz.

Zur Bestimmung von MMAP-Werten wird zudem auf C. Donker, PSTC Annual Technical Seminar, Proceedings, S. 149-164, Mai 2001, verwiesen.

### Testmethode IV - Harzerweichungstemperatur

Die Klebharzerweichungstemperatur wird nach der einschlägigen Methodik durchgeführt, die als Ring & Ball bekannt ist und nach ASTM E28 - 14 standardisiert ist.

Zur Bestimmung der Klebharzerweichungstemperatur der Harze kommt ein Ring-Kugel-Automat HRB 754 der Firma Herzog zum Einsatz. Harzmuster werden zunächst fein gemörsert. Das resultierende Pulver wird in einen Messingzylinder mit Bodenöffnung (Innendurchmesser am oberen Teil des Zylinders 20 mm, Durchmesser der Bodenöffnung des Zylinders 16 mm, Höhe des Zylinders 6 mm) gefüllt und auf einem Heiztisch geschmolzen. Die Befüllmenge wird so gewählt, dass das Harz nach dem Schmelzen den Zylinder ohne Überstand voll ausfüllt. Der resultierende Probekörper wird samt Zylinder in die Probehalterung des HRB 754 eingelegt. Zur Befüllung des Temperierbads wird Glycerin verwendet, sofern die Klebharzerweichungstemperatur zwischen 50 °C und 150 °C liegt. Bei niedrigeren Klebharzerweichungstemperaturen kann auch mit einem Wasserbad gearbeitet werden. Die Prüfkugeln haben einen Durchmesser von 9,5 mm und wiegen 3,5 g. Entsprechend der HRB 754 Prozedur wird die Kugel oberhalb des Probekörpers im Temperierbad angeordnet und auf dem Probekörper abgelegt. 25 mm unter dem Zylinderboden befindet sich eine Auffangplatte, 2 mm über dieser eine Lichtschranke. Während des Messvorgangs wird die Temperatur mit 5 °C/min erhöht. Im Temperaturbereich der Klebharzerweichungstemperatur beginnt sich die Kugel durch die Bodenöffnung des Zylinders zu bewegen, bis sie schließlich auf der Auffangplatte zum Stehen kommt. In dieser Position wird sie von der Lichtschranke detektiert und zu diesem Zeitpunkt die Temperatur des Temperierbads registriert. Es findet eine Doppelbestimmung statt. Die Klebharzerweichungstemperatur ist der Mittelwert aus den beiden Einzelmessungen.

### Testmethode V - Verklebungsfestigkeit/Ablöseverhalten

Zur Messung der Verklebungsfestigkeit auf faserhaltigem Substrat wird zunächst ein Testklebeband hergestellt. Hierzu wird entsprechend der aufgeführten Beispiele eine beschichtete Formulierung manuell mittels einer Gummiwalze auf eine geätzte 23 µm dicke Polyethylenterephthalat-Folie laminiert. Der offenen Klebeschichtseite wird anschließend eine Lage eine Spinnvlieses (Verbund aus 35 g/m² Polyolefin-Copolymer-Folie und 80 g/m² PP-Spinnvlies der Fa. CaPlast) durch zweimaliges Überrollen mit einer 2 kg Stahlrolle zukaschiert. Aus diesem Verbund werden Probestreifen in 20 mm Breite und etwa 300 mm Länge derart ausgeschnitten, dass der obere und untere Träger auf derselben Seite des Teststreifens ein loses (klebmassefreies) Ende aufweisen. Zur Messung wird eine Zugprüfmaschine (z.B. Fa. Zwick) eingesetzt. Das lose Ende des unteren Trägers der Kaschierverklebung (geätzte PET-Folie) wird in der unteren Klemmbacke der Prüfmaschine fixiert, während das lose Ende des oberen Trägers (Splinnvlies) in der oberen Klemmbacke, also an der Kraftmessdose eingespannt wird. Die Abzugsgeschwindigkeit beträgt 300 mm/min. Die Messergebnisse sind in N/cm angegeben und sind gemittelt aus drei Messungen. Alle Messungen wurden bei Raumtemperatur unter klimatisierten Bedingungen durchgeführt. Durch Varianz des Vliesmaterials können Toleranzen in der Klebkraftwerten von +/-2 N/cm auftreten. Gewünscht ist ein Ablöseprozess, bei dem es zu Faserausriss aus dem Vliesmaterial kommt (Beurteilung "Faserausriss"). Kohäsives Versagen in der Klebeschicht ist ein Indikator für zu hohe Weichheit der Klebeformulierung. Formulierungen, die ein solches Ablöseverhalten (Beurteilung "kohäsiv") zeigen, sind entsprechend der vorliegenden Erfindung nicht geeignet. Liegen die Klebkraftwerte zu niedrig, dann erfolgt üblicherweise kein Faserausriss. Die Klebeschicht löst sich dann adhäsiv vom Vliesmaterial (Beurteilung "adhäsiv"), was ebenfalls nicht anforderungsgerecht ist. Testmethode V bietet daher einerseits Aussagen zur Leistungsfähigkeit in Bezug auf die Verklebungsfestigkeit von Prüfmustern und andererseits im Hinblick auf anforderungsgerechte Kohäsion der untersuchten Klebeformulierungen.

### Testmethode VI - Alterungsbeständigkeit

Die Alterungsbeständigkeit wurde durch Ablöseversuche von Prüfklebebändern von Lackoberflächen nach Bewitterungstests überprüft. Hierzu kam ein Weatherometer-Test nach Florida-Bedingungen zum Einsatz. Prüfklebebänder wurden folgendermaßen hergestellt:
Aus einer Lösung in Siedegrenzenbenzin 60/95 wurde eine Formulierung bestehend aus 95 Gew.-% Oppanol B80 und 5 Gew.-% Sylvarez TP95 auf eine Lage abgestuft doppelseitig silikonisierten Trennpapiers beschichtet und für 20 min bei 120 °C getrocknet, so dass eine 15 g/m² dicke Klebeschicht resultierte. Der offenen Klebeschichtseite wurde eine 90 µm dicke Polypropylenblasfolie zukaschiert. Auf die der Polyisobutylen-Klebemassen gegenüberliegenden Trägerseite wurde eine auf einem silikonisierten Trennpapier befindliche Schicht einer erfindungsgemäßen Klebemasse manuell mittels einer Gummiwalze zukaschiert. Schließlich wurde, nachdem das Trennpapier ausgedeckt worden ist, der offenen Klebeseite der erfindungsgemäßen Formulierung eine Lage Spinnvlies (siehe Test V) mit der Vliesseite zur Klebeschicht durch manuelles Anrollen mittels eine Gummirolle zukaschiert. Schließlich wurden 20 mm Prüfstreifen in ca. 300 mm Länge zugeschnitten, das zweite Trennpapier von der Polyisobutylen-basierenden Klebeschicht entfernt und über diese der Verbund durch zweimaliges Überrollen mit einer 2 kg Stahlwalze auf eine mit Lack (Basislack: 20 µm wasserbasierter Schwarzlack der BASF SE, 4 min bei 70 °C getrocknet; Klarlack: 45 µm 2K Lack FF99 der BASF SE, nach 5 min Ablüften bei Raumtemperatur 20 min bei 140 °C getrocknet; 24 h Reifung vor Verwendung) beschichtete Blechplatte geklebt.

Der Test-Verbund wurde für 1000 h einem Schnellbewitterungstest nach DIN EN ISO 4892-2:2013 in einem Weather-o-Meter Xenotest Beta LM der Fa. Atlas B.V. (Beregnungszyklus 102:18; Schwarz-Standard-Temperatur 65 ± 2 °C; Kammertemperatur in der Trockenphase 40 ± 5 °C; relative Luftfeuchte in der Trockenphase 70 ± 10 %; Bestrahlungsintensität 60 W/m² bei 300 - 400 nm) unterzogen und nach anschließender Rekonditionierung bei 23 °C und 50 % rel. Luftfeuchtigkeit das Ablöseverhalten von der lackierten Prüfplatte beurteilt. Dazu wurden die Musterstreifen manuell von der Prüfplatte abgezogen und die Lackoberfläche optisch begutachtet. Werden Rückstände des Klebebandmusters gefunden oder wurde der Lack optisch erkennbar verformt oder anderweitig in seinem optischen Erscheinungsbild verändert, ist die Beurteilung "nicht in Ordnung" (n.i.O.). Werden dagegen keine Rückstände gefunden oder wurde der Lack nicht optisch erkennbar verformt oder anderweitig in seinem optischen Erscheinungsbild verändert, ist die Beurteilung "in Ordnung" (i.O.).

### Beispiele

### Musterpräparation

Die Klebmassen wurden in einem beheizbaren Doppelsigmakneter der Firma Aachener Maschinenbau Küpper Typ III-P1 Hotmeltkneter hergestellt. Der Mantel des Kneters wurde durch ein Thermalölheizbad der Firma Lauda erwärmt. Hierbei wurde eine Badtemperatur von 190 °C eingestellt. Während des gesamten Knetvorgangs lag eine CO₂-Schutzgasatmosphäre an. Der Kneter wurde bei 50 U/min betrieben.

Zunächst wurden die Elastomere zusammen mit dem festen Alterungsschutzmittel Irganox 1076 sowie zwei UV-Schutzmitteln (einem Benzotriazol-Derivat und einem HALS-Derivat) eingewogen und im Kneter vorgelegt. Danach wurden etwa 10 % der Menge an Festharz zugegeben (soweit It. Rezeptur möglich wird hierfür Harz I gewählt) und für 15 Minuten geknetet. Nachfolgend wurde im Abstand von jeweils 10 Minuten jeweils ein Drittel der verbleibenden Menge an Klebharzen sowie schließlich Weichmacher zugegeben und eingearbeitet.

Nach Abschluss des Knetvorgangs wurden die Knetmassen dem Kneter entnommen und auf Raumtemperatur erkalten lassen.

Die erkalteten Massen wurden zwischen zwei Lagen silikonisiertem Trennpapier positioniert und mit einer Heißpresse der Firma Lauffer GmbH & CO KG Typ RLKV 25 bei 130 °C zu Handmustern mit der jeweiligen Schichtdicke verpresst. Die Klebeschichten wurden auf ein Trägermaterial laminiert. Dies erfolgte manuell mit einer Gummirolle. Als Trägermaterial kam eine 90 µm dicke Cast-Polypropylen-Folie zum Einsatz.

### Eingesetzte Rohstoffe

**Tabelle 1: eingesetzte Rohstoffe**

| | Name | Typ | Hersteller |
|---|---|---|---|
| Elastomer | Kraton G1657 *) | Polystyrol-Poly(ethylen-co-butylen)-Blockcopolymer, SEBS (Polystyrol-Anteil 13 Gew.-%; Diblock-Anteil 29 Gew.-%) | Kraton Polymers |
| Klebharz I | Regalite R1125 | Kohlenwasserstoffharz (MMAP 83°C; DACP 55°C, TRB 123°C) | Eastman Chemical |
| Klebharz II | Foral AX-E | Kolophoniumester (MMAP -21°C; DACP <-50°C, TRB 75°C) | Eastman Chemical |
| | Foral 105-E | Kolophoniumester (MMAP 16°C; DACP <-50°C, TRB 101°C) | Eastman Chemical |
| | Foral 85-E | Kolophoniumester (MMAP 7°C; DACP <-50°C, TRB 80°C) | Eastman Chemical |
| Weichmacher | Hexamoll Dinch | Cyclohexyldicarbonsäurediester | BASF SE |
| | Wingtack 10 | C5-Weichharz | Cray Valley |
| | Indopol H100 | Polybuten | Ineos Europe |
| | Abitol E | Hydroabietylalkohol | Eastman Chemical |
| | Dercolyte LTG | Polyterpen Weichharz | DRT |
| Alterungsschutzmittel | Irganox 1076 | Sterisch gehindertes Phenol | BASF SE |
| UV-Schutzmittel | A | Benzotriazol-Derivat | |
| | B | HALS-Derivat | |

| | | | |
|---|---|---|---|
| *) cf. Produktinformation Kraton "Product Guide Innovation Powered by Kraton Polymers" von 2016. | | | |

### Beispiele

Alle Angaben in Gew.-%; alle Klebemassen (100 Teile) enthielten außerdem zusätzlich jeweils 0,5 Teile eines Benzotriazol-Derivats, eines HALS-Derivats und Irganox 1076.

**Tabelle 2:**

| **Rohstoffe** | **Beispiel E1** | **Beispiel E2** | **Beispiel E3** | **Beispiel E4** | **Beispiel E5** | **Beispiel E6** |
|---|---|---|---|---|---|---|
| **Elastomer** | 38,0 | 35,0 | 40,0 | 30,0 | 35,0 | 30,0 |
| Kraton 1657 | | | | | | |
| **Klebharz I** | 42,0 | 40,0 | 20,0 | 40,0 | 40,0 | 36,0 |
| Regalite R1125 | | | | | | |

| **Klebharz II** | | | | | | |
|---|---|---|---|---|---|---|
| Foral AX-E | | 5,0 | 25,0 | 15,0 | 12,5 | 20,0 |

| **Weichmacher** | | | | | | |
|---|---|---|---|---|---|---|
| Hexamoll Dinch | 20,0 | 20,0 | 15,0 | 15,0 | 12,5 | 14,0 |
| **Schichtdicke [µm]** | 160 | 160 | 160 | 160 | 120 | 160 |
| **Verklebungsfestigkeit (Test V) [N/cm]** | 8,0 | 12,5 | 12,6 | 13,2 | 8,7 | 13,0 |
| **Ablöseverhalten (Test V)** | Faserausriss | Faserausriss | Faserausriss | Faserausriss | Faserausriss | Faserausriss |
| **Alterungsbeständigkeit (Test VI)** | i. O. | i. O. | i. O. | i. O. | i. O. | i. O. |

**Tabelle 3:**

| **Rohstoffe** | **Beispiel V1** | **Beispiel V2** | **Beispiel V3** | **Beispiel V4** | **Beispiel V5** |
|---|---|---|---|---|---|
| **Elastomer** | 38,0 | 38,0 | 38,0 | 38,0 | 38,0 |
| Kraton 1657 | | | | | |
| **Klebharz I** | 42,0 | 42,0 | 42,0 | 42,0 | 42,0 |
| Regalite R1125 | | | | | |

| **Klebharz II** | | | | | |
|---|---|---|---|---|---|
| Foral AX-E | 20,0 | | | | |

| **Weichmacher** | | | | | |
|---|---|---|---|---|---|
| Wingtack 10 | | 20,0 | | | |
| Indopol H100 | | | 20,0 | | |
| Abitol-E | | | | 20,0 | |
| Dercolyte LTG | | | | | 20,0 |
| **Schichtdicke [µm]** | 160 | 160 | 160 | 160 | 120 |
| **Verklebungsfestigkeit (Test V) [N/cm]** | 4,4 | 0,8 | 1,6 | 1,2 | 1,0 |
| **Ablöseverhalten (Test V)** | adhäsiv | adhäsiv | adhäsiv | adhäsiv | adhäsiv |
| **Alterungsbeständigkeit (Test VI)** | Nicht durchgeführt | Nicht durchgeführt | Nicht durchgeführt | Nicht durchgeführt | Nicht durchgeführt |

**Tabelle 4:**

| **Rohstoffe** | **Beispiel E7** | **Beispiel E8** | **Beispiel E9** | **Beispiel E10** | **Beispiel V6** | **Beispiel V7** |
|---|---|---|---|---|---|---|
| **Elastomer** | 30,0 | 30,0 | 30,0 | 30,0 | 30,0 | 30,0 |
| Kraton 1657 | | | | | | |
| **Klebharz I** | 40,0 | 40,0 | 40,0 | 30,0 | 35,0 | 39,0 |
| Regalite R1125 | | | | | | |

| **Klebharz II** | | | | | | |
|---|---|---|---|---|---|---|
| Foral AX-E | 15,0 | | | 25,0 | 15,0 | 13,0 |
| Foral 105-E | | 15,0 | | | | |
| Foral 85-E | | | 15,0 | | | |

| **Weichmacher** | | | | | | |
|---|---|---|---|---|---|---|
| Hexamoll Dinch | 15,0 | 15,0 | 15,0 | 15,0 | 20,0 | 18,0 |
| **Schichtdicke [µm]** | 120 | 120 | 120 | 160 | 160 | 160 |
| **Verklebungsfestigkeit (Test V) [N/cm]** | 11,9 | 9,2 | 14,1 | 9,0 | 3,6 | 7,7 |
| **Ablöseverhalten (Test V)** | Faserausriss | Faserausriss | Faserausriss | Faserausriss | kohäsiv | kohäsiv |
| **Alterungsbeständigkeit (Test VI)** | i. O. | i. O. | i. O. | i. O. | Nicht durchgeführt | Nicht durchgeführt |

Tabelle 2 zeigt verschiedene erfindungsgemäße Klebemassenzusammensetzungen mit ihren Eigenschaften in Bezug auf Verklebungsfestigkeit, Ablöseverhalten und Alterungsbeständigkeit. Die Anteile an Elastomer, Klebharz I und ggf. II sowie Weichmacher sind in den erfindungsgemäßen Bereichen variiert. Die erfindungsgemäßen Klebemassen weisen eine Verklebungsfestigkeit von mindestens 8,0 N/cm auf, und beim Ablöseprozess kommt es zum (gewünschten) Faserausriss aus dem Vliesmaterial. Ferner bestanden alle erfindungsgemäßen Klebemasse den Alterungsbeständigkeitstest zur vollen Zufriedenheit.

Bei den Vergleichsbeispielen, die in Tabelle 3 wiedergegeben sind, kommt entweder kein Weichmacher (Beispiel V1) oder kein erfindungsgemäßer Weichmacher (Beispiele V2 bis V5) zum Einsatz. Neben nur geringen Verklebungsfestigkeiten lösen sich die Klebemassen adhäsiv vom Vliesmaterial, d.h. es findet keine ausreichende Verankerung auf dem Vliesmaterial statt und Klebemasse und Vliesmaterial werden im Rahmen des Ablöseprozesses voneinander separiert.

Tabelle 4 umfasst erfindungsgemäße Beispiele E7 bis E10 sowie nicht erfindungsgemäße Vergleichsbeispiele V6 und V7. Letztere weisen eine für den Anteil an Klebharz II zu große Menge an Weichmacher auf. Die Folge ist eine zu weiche Klebemasse, die ein kohäsives Ablösen der Klebemasse zeigt, d.h. die Verankerung auf dem Vlies ist zwar gegeben, jedoch erfolgt ein Ablösen innerhalb der Klebeschicht bei geringen Verklebungsfestigkeiten von unter 8 N/cm.

Sämtliche erfindungsgemäße Klebemassen zeigen nach entsprechendem Test auf die Alterungsbeständigkeit ein optisch ansprechendes Erscheinungsbild ohne Verformungen oder sonstige Beeinträchtigungen.

Mit der vorliegenden Erfindung ist es somit gelungen, Klebemassen zur Verfügung zu stellen, die für die Verklebung auf porösen und/oder faserhaltigen Materialien geeignet sind und dabei eine hohe Langzeitstabilität aufweisen.

## Patentansprüche

1. Klebemasse, bestehend aus
(a) 25 Gew.-% bis 50 Gew.-%, bevorzugt 30 Gew.-% bis 40 Gew.-% zumindest einer Sorte eines gesättigten Vinylaromatenblockcopolymers,
(b) 20 Gew.-% bis 50 Gew.-%, bevorzugt 25 Gew.-% bis 45 Gew.-% zumindest einer Sorte eines ersten Klebharzes, das ein Kohlenwasserstoffharz mit einem DACP-Wert (bestimmt wie in der Beschreibung angegeben) von mehr als +25°C und einem MMAP-Wert (bestimmt wie in der Beschreibung angegeben) von mehr als +60°C ist,
sowie entweder
(c1) 0 Gew.-% bis 10 Gew.-% zumindest einer Sorte eines zweiten Klebharzes mit einem DACP-Wert von weniger als 0°C und einem MMAP-Wert von weniger als +30°C, und
(d1) 5 Gew.-% bis 25 Gew.-% zumindest einer Sorte eines aliphatischen oder cycloaliphatischen Alkylesters als Weichmacher,
oder
(c2) 5 Gew.-% bis 25 Gew.-%, bevorzugt 10 Gew.-% bis 20 Gew.-% zumindest einer Sorte eines zweiten Klebharzes mit einem DACP-Wert von weniger als 0°C und einem MMAP-Wert von weniger als +30°C, und
(d2) 5 Gew.-% bis 15 Gew.-% zumindest einer Sorte eines aliphatischen oder cycloaliphatischen Alkylesters als Weichmacher,
sowie
(e) optional weiteren Additiven.

2. Klebemasse nach Anspruch 1, **dadurch gekennzeichnet, dass** das Vinylaromatenblockcopolymer ein Styrolblockcopolymer ist, wobei das Styrolblockcopolymer vorzugsweise Polystyrol-Poly(ethylen-co-butylen)-Blockcopolymer (SEBS), Polystyrol-Poly(ethylen-co-propylen)-Blockcopolymer (SEPS), im Elastomerblock gesättigtes Polystyrol-Poly(isopren-co-butadien)-Blockcopolymer (SEEPS), Polystyrol-Poly-iso-Butylen-Blockcopolymer (SiBS) oder eine Mischung davon umfasst.

3. Klebemasse nach Anspruch 1 oder 2, **dadurch gekennzeichnet, dass** das zweite Klebharz ein Kolophoniumharz oder ein Rohtallölharz, insbesondere ein hydrierter oder disproportionierter Kolophoniumester ist.

4. Klebemasse nach einem der Ansprüche 1 bis 3, **dadurch gekennzeichnet, dass** der Weichmacher mindestens ein Weichmacher, ausgewählt aus der Gruppe bestehend aus Ester aliphatischer oder cycloaliphatischer Carbonsäuren und Phosphorsäureester, ist.

5. Klebemasse nach Anspruch 4, **dadurch gekennzeichnet dass** der Weichmacher mindestens ein Weichmacher, ausgewählt aus der Gruppe bestehend aus Alkyl- oder Cycloalkyladipaten, insbesondere Di-(2-Ethylhexyl)-adipat, Diisononyladipat, Diisodecyladipat, Ditridecyladipat und Dioctyladipat, Alkyl- und Cycloalkylsebacaten, insbesondere Di-(2-Ethylhexyl)-sebacat, und Alkyl- und Cycloalkylazelaten, insbesondere Di-(2-Ethylhexyl)-azelat, aliphatischen oder cycloaliphatischen Cyclohexyldicarbonsäurediester, insbesondere 1,2-Diisobutylcyclohexandicarbonsäureester, 1,2-Di-(2-Ethylhexyl)-cyclohexan-dicarbonsäureester oder 1,2-Diisononylcyclohexandicarbonsäureester, ist.

6. Klebemasse nach Anspruch 5, **dadurch gekennzeichnet dass** der Weichmacher ein aliphatischer oder cycloaliphatischer Cyclohexyldicarbonsäurediester, insbesondere 1,2-Diisobutylcyclohexandicarbonsäureester, 1,2-Di-(2-Ethylhexyl)-cyclohexan-dicarbonsäureester oder 1,2-Diisononylcyclohexandicarbonsäureester, ist.

7. Klebemasse nach einem der Ansprüche 1 bis 6, **dadurch gekennzeichnet, dass** sie als weiteres Additiv mindestens ein UV-Schutzmittel, insbesondere in einer Menge von 0,5 Gew.-% bis 2 Gew.-% enthält.

8. Klebemasse nach einem der Ansprüche 1 bis 7, **dadurch gekennzeichnet, dass** sie als weiteres Additiv mindestens ein Antioxidationsmittel, insbesondere in einer Menge von 0,2 Gew.-% bis 1,5 Gew.-%, insbesondere ein Alterungsschutzmittel ausgewählt aus der Gruppe der Ein- und/oder Mehrkernphenole, die in Ortho- und/ oder Parastellung zur phenolischen OH-Gruppe eine Benzylthioethergruppierung trägt, enthält.

9. Klebemasse nach einem der Ansprüche 2 bis 8, **dadurch gekennzeichnet, dass** zumindest ein gesättigtes Styrolblockcopolymer als Diblockcopolymer vorliegt mit einem Anteil in Bezug auf die gesättigten Vinylaromatenblockcopolymeren von bis zu 50 Gew.-%, bevorzugt von 10 Gew.-% bis 30 Gew.-%.

10. Klebeband, insbesondere doppelseitiges Klebeband, enthaltend mindestens eine Klebemasse nach einem der Ansprüche 1 bis 9.

11. Klebeband nach Anspruch 10, **dadurch gekennzeichnet, dass** es einen Träger enthält.

12. Klebeband nach Anspruch 10 oder 11, **dadurch gekennzeichnet, dass** es ein Transfertape ist.

13. Verwendung des Klebebands nach Anspruch 10 bis 12 zur Verklebung auf einem porösen und/oder rauen, insbesondere flexiblem Substrat.

## Claims

1. Adhesive composition consisting of
(a) 25 wt% to 50 wt%, preferably 30 wt% to 40 wt%, of at least one kind of a saturated vinylaromatic block copolymer,
(b) 20 wt% to 50 wt%, preferably 25 wt% to 45 wt%, of at least one kind of a first tackifier resin, which is a hydrocarbon resin, having a DACP (determined as specified in the description) of more than +25°C and an MMAP (determined as specified in the description) of more than +60°C,
and also either
(c1) 0 wt% to 10 wt% of at least one kind of a second tackifier resin, having a DACP of less than 0°C and an MMAP of less than +30°C, and
(d1) 5 wt% to 25 wt% of at least one kind of an aliphatic or cycloaliphatic alkyl ester as plasticizer,
or
(c2) 5 wt% to 25 wt%, preferably 10 wt% to 20 wt%, of at least one kind of a second tackifier resin, having a DACP of less than 0°C and an MMAP of less than +30°C, and
(d2) 5 wt% to 15 wt% of at least one kind of an aliphatic or cycloaliphatic alkyl ester as plasticizer,
and also
(e) optionally further additives.

2. Adhesive composition according to Claim 1, **characterized in that** the vinylaromatic block copolymer is a styrene block copolymer, the styrene block copolymer preferably comprising polystyrene-poly(ethylene-co-butylene) block copolymer (SEBS), polystyrene-poly(ethylene-co-propylene) block copolymer (SEPS), polystyrene-poly(isoprene-co-butadiene) block copolymer saturated in the elastomer block (SEEPS), polystyrene-polyisobutylene block copolymer (SiBS) or a mixture thereof.

3. Adhesive composition according to Claim 1 or 2, **characterized in that** the second tackifier resin is a rosin or a crude tall oil resin, more particularly a hydrogenated or disproportionated rosin ester.

4. Adhesive composition according to any of Claims 1 to 3, **characterized in that** the plasticizer is at least one plasticizer selected from the group consisting of esters of aliphatic or cycloaliphatic carboxylic acids and phosphoric esters.

5. Adhesive composition according to Claim 4, **characterized in that** the plasticizer is at least one plasticizer selected from the group consisting of alkyl or cycloalkyl adipates, more particularly di(2-ethylhexyl) adipate, diisononyl adipate, diisodecyl adipate, ditridecyl adipate and dioctyl adipate, alkyl and cycloalkyl sebacates, more particularly di(2-ethylhexyl) sebacate, and alkyl and cycloalkyl azelates, more particularly di(2-ethylhexyl) azelate, aliphatic or cycloaliphatic cyclohexyldicarboxylic diesters, more particularly 1,2-diisobutylcyclohexanedicarboxylic esters, 1,2-di-(2-ethylhexyl)cyclohexanedicarboxylic esters or 1,2-diisononyl-cyclohexanedicarboxylic esters.

6. Adhesive composition according to Claim 5, **characterized in that** the plasticizer is an aliphatic or cycloaliphatic cyclohexyldicarboxylic diester, more particularly 1,2-diisobutylcyclohexanedicarboxylic ester, 1,2-di-(2-ethylhexyl)cyclohexane dicarboxylic ester or 1,2-diisononylcyclohexanedicarboxylic ester.

7. Adhesive composition according to any of Claims 1 to 6, **characterized in that** it comprises as further additive at least one UV protectant, more particularly in an amount of 0.5 wt% to 2 wt%.

8. Adhesive composition according to any of Claims 1 to 7, **characterized in that** it comprises as further additive at least one antioxidant, more particularly in an amount of 0.2 wt% to 1.5 wt%, more particularly an ageing inhibitor selected from the group of the mono- and/or polynuclear phenols carrying a benzyl thioether moiety positioned ortho and/or para to the phenolic OH group.

9. Adhesive composition according to any of Claims 2 to 8, **characterized in that** at least one saturated styrene block copolymer takes the form of a diblock copolymer with a proportion in relation to the saturated vinylaromatic block copolymers of up to 50 wt%, preferably of 10 wt% to 30 wt%.

10. Adhesive tape, more particularly double-sided adhesive tape, comprising at least one adhesive composition according to any of Claims 1 to 9.

11. Adhesive tape according to Claim 10, **characterized in that** it comprises a carrier.

12. Adhesive tape according to Claim 10 or 11, **characterized in that** it is a transfer tape.

13. Use of the adhesive tape according to Claims 10 to 12 for bonding on a porous and/or rough, especially flexible, substrate.

## Revendications

1. Masse adhésive, constituée de
(a) 25 % en poids à 50 % en poids, préférablement 30 % en poids à 40 % en poids d'au moins une sorte de copolymère à blocs aromatiques vinyliques saturé,
(b) 20 % en poids à 50 % en poids, préférablement 25 % en poids à 45 % en poids d'au moins une sorte de première résine adhésive, qui est une résine d'hydrocarbure dotée d'une valeur DACP (déterminée comme indiqué dans la description) de plus de +25 °C et d'une valeur MMAP (déterminée comme indiqué dans la description) de plus de +60 °C,
ainsi que constituée soit de
(c1) 0 % en poids à 10 % en poids d'au moins une sorte de deuxième résine adhésive dotée d'une valeur DACP inférieure à 0 °C et d'une valeur MMAP inférieure à +30 °C, et
(d1) 5 % en poids à 25 % en poids d'au moins une sorte d'ester d'alkyle aliphatique ou cycloaliphatique en tant que plastifiant,
soit de
(c2) 5 % en poids à 25 % en poids, préférablement 10 % en poids à 20 % en poids d'au moins une sorte de deuxième résine adhésive dotée d'une valeur DACP inférieure à 0 °C et d'une valeur MMAP inférieure à +30 °C, et
(d2) 5 % en poids à 15 % en poids d'au moins une sorte d'ester d'alkyle aliphatique ou cycloaliphatique en tant que plastifiant,
ainsi que
(e) éventuellement d'autres additifs.

2. Masse adhésive selon la revendication 1, **caractérisée en ce que** le copolymère à blocs aromatiques vinyliques est un copolymère à blocs de styrène, le copolymère à blocs de styrène comprenant de préférence un copolymère à blocs polystyrène-poly(éthylène-co-butylène) (SEBS), un copolymère à blocs polystyrène-poly(éthylène-co-propylène) (SEPS), un copolymère à blocs polystyrène-poly(isoprène-co-butadiène) saturé dans le bloc d'élastomère (SEEPS), un copolymère à blocs polystyrène-poly-iso-butylène (SiBS) ou un mélange correspondant.

3. Masse adhésive selon la revendication 1 ou 2, **caractérisée en ce que** la deuxième résine adhésive est une résine de colophane ou une résine de tallöl brut, en particulier un ester de colophane hydrogéné ou disproportionné.

4. Masse adhésive selon l'une quelconque des revendications 1 à 3, **caractérisée en ce que** le plastifiant est au moins un plastifiant choisi dans le groupe constitué par des esters d'acides carboxyliques aliphatiques ou cycloaliphatiques et des esters d'acide phosphorique.

5. Masse adhésive selon la revendication 4, **caractérisée en ce que** le plastifiant est au moins un plastifiant choisi dans le groupe constitué par des adipates d'alkyle ou de cycloalkyle, en particulier l'adipate de di-(2-éthylhexyle), l'adipate de diisononyle, l'adipate de diisodécyle, l'adipate de tridécyle et l'adipate de dioctyle, des sébaçates d'alkyle et de cycloalkyle, en particulier le sébaçate de di-(2-éthylhexyle), et des azélates d'alkyle et de cycloalkyle, en particulier l'azélate de di-(2-éthylhexyle), des diesters aliphatiques ou cycloaliphatiques d'acide cyclohexyldicarboxylique, en particulier l'ester diisobutylique de l'acide 1,2-cyclohexanedicarboxylique, l'ester de di-(2-éthylhexyle) de l'acide 1,2-cyclohexanedicarboxylique ou l'ester de diisononyle de l'acide 1,2-cyclohexanedicarboxylique.

6. Masse adhésive selon la revendication 5, **caractérisée en ce que** le plastifiant est un diester aliphatique ou cycloaliphatique d'acide cyclohexyldicarboxylique, en particulier l'ester diisobutylique de l'acide 1,2-cyclohexanedicarboxylique, l'ester de di-(2-éthylhexyle) de l'acide 1,2-cyclohexanedicarboxylique ou l'ester de diisononyle de l'acide 1,2-cyclohexanedicarboxylique.

7. Masse adhésive selon l'une quelconque des revendications 1 à 6, **caractérisée en ce qu'**elle contient en tant qu'additif supplémentaire au moins un agent de protection contre les UV, en particulier en une quantité de 0,5 % en poids à 2 % en poids.

8. Masse adhésive selon l'une quelconque des revendications 1 à 7, **caractérisée en ce qu'**elle contient en tant qu'additif supplémentaire au moins un antioxydant, en particulier en une quantité de 0,2 % en poids à 1,5 % en poids, en particulier un agent anti-vieillissement choisi dans le groupe des phénols à un noyau et/ou à plusieurs noyaux, qui porte un groupement benzylthioéther en position ortho et/ou para par rapport au groupe OH phénolique.

9. Masse adhésive selon l'une quelconque des revendications 2 à 8, **caractérisée en ce qu'**au moins un copolymère à blocs de styrène saturé est présent en tant que copolymère dibloc en une proportion, par rapport aux copolymères à blocs aromatiques vinyliques saturés, allant jusqu'à 50 % en poids, préférablement de 10 % en poids à 30 % en poids.

10. Ruban adhésif, en particulier ruban adhésif double face, contenant au moins une masse adhésive selon l'une quelconque des revendications 1 à 9.

11. Ruban adhésif selon la revendication 10, **caractérisé en ce qu'**il contient un support.

12. Ruban adhésif selon la revendication 10 ou 11, **caractérisé en ce qu'**il est un ruban de transfert.

13. Utilisation du ruban adhésif selon les revendications 10 à 12 pour le collage d'un substrat poreux et/ou rugueux, en particulier flexible.
